# EUROPEAN PATENT SPECIFICATION

(11) **EP 0 255 325 B1**
(45) Date of publication and mention of the grant of the patent: **10.02.1993**
(21) Application number: 87306630.2
(22) Date of filing: 28.07.1987
(51) Int. Cl.: H04M 3/50, H04M 3/58

(54) **Call transfer between a message service system and a telephone switching system**
Anrufumlegung zwischen einem Nachrichtendienstsystem und einem Fernsprechvermittlungssystem
Transfert d'appel entre un système de service de message et un système de commutation téléphonique

(30) Priority: 30.07.1986 US 892021
(43) Date of publication of application: 03.02.1988
(73) Proprietor: AT&T Corp., New York, NY 10013-2412 (US)
(72) Inventor: Grady, Steven Clifford, Thornton Colorado 80241 (US); Greenfield, Jeffrey Louis, Howell New Jersey 07731 (US); Lothrop, John Rodney, Longmont Colorado 80501 (US); Witmore, Ronald Kirk, Lafayette Colorado 80026 (US)
(74) Representative: Buckley, Christopher Simon Thirsk

(56) References cited:
- WO-A-86/04474
- DE-A- 2 326 701
- COMPUTER COMMUNICATIONS, vol. 8, no. 3, June 1985, pages 115-120, Butterworth & Co. (Publishers) Ltd, Guildford, Surrey, GB; S. NEWTON: "Voice messaging systems"

## Description

This invention relates to methods of operating communication systems and to telephone switching systems.

Message services is the term used to collectively identify the various office automation systems associated with a telephone switching system. These office automation systems are used to improve the productivity of the white collar worker in an office environment by providing an asynchronous voice (or short text message) communication medium.

The voice mail service system is one example of these message services. The state of the art of voice mail service systems is described by S. Newton in "Voice Messaging Systems", Computer Communications, Vol. 8, No. 3 (June 1985), pp. 115-120, Butterworth and Co. (Publishers) Ltd., Guilford, Surrey, G.B. The voice mail service system offers two distinct communication features: Voice Mailbox (VM) and Call Answering (CA). The voice mailbox feature is involved when a message originator calls the voice mail service system by dialing an access code on the telephone station set touch-tone pad. The message originator identifies one or more message recipients who are also served by the telephone switching system by dialing their station numbers, and then generates a voice message for later delivery by the voice mail service system to the designated message recipients. The delivery of the voice message may be immediate or at a scheduled time specified by the message originator. The delivery is passive in that the voice mail service system places the message in a mailbox assigned to each identified message recipient and activates the message recipient's message waiting indicator on the message recipient's telephone station set instead of actively calling the message recipient to playback the message. The message recipient may then access the voice mail service system to save the message for subsequent action, listen to the message, delete it, append comments and route the message to other message recipients, or reply and return the message to the message originator.

The call answering feature of voice mail service is geared to the convenience of the message recipient, unlike the voice mailbox feature which is geared towards aiding the message originator. The nonavailability of an individual to answer a telephone call results in that telephone call being redirected to the voice mail service system call answering feature. The caller receives a prerecorded announcement message from the absent individual and can then leave a voice message in the absent individual's voice mailbox.

The difficulty with existing voice mail service systems is that a calling party, once connected to this system, cannot transfer the call to another telephone station set or other message service system served by the telephone switching system. The calling party must terminate the telephone call and initiate a new telephone call. This problem is most significant when the calling party accesses a message service system from a remote location via a long distance call.

According to one aspect of this invention there is provided a method of operating a communication system as claimed in claim 1.

According to another aspect of this invention there is provided a telephone switching system as claimed in claim 4.

In an embodiment of the invention a business communication system provides a call transfer capability between a message service system and a telephone switching system. The business communication system consists of a telephone switching system as well as a number of message service systems and terminal devices to provide business communication services to a plurality of subscribers. The business communication system integrates the control of the various message service systems so that a calling party connected to one of these message service systems through the telephone switching system can transfer a telephone call between that message service system and any telephone station set, trunk or other message service system that is part of the business communication system.

The business communication system integrates the control of the plurality of message service systems by connecting each message service system to the switch processor of the telephone switching system via data links. The switch processor and the message service systems can communicate over these data links by exchanging control messages.

A calling party, connected through the telephone switching system to one of the message service systems, invokes the call transfer capability by transmitting control signals which indicate a call transfer request from the calling party's telephone station set over the communication connection to the message service system. The calling party can select one of three call transfer options: transfer the call to a default destination specified by the called party, or select a specific destination defined by the calling party or transfer the call to the party that originated the message that the calling party is retrieving. In any of these three cases, the destination identification signals transmitted by the calling party to the message service system are incorporated into a call transfer request control message by the message service system and transmitted to the switch processor of the telephone switching system. This call transfer request control message indicates the nature of the service request, a call transfer, as well as the identification of the communication connection serving the calling party, the identification of the alternate destination for this call and the reason for the call transfer, i.e., redirected call. The switch processor responds to this call transfer request control message by removing the message service system voice port from the time slot assigned to the calling party in the telephone switching system switching network. The telephone switching system then adds the voice port circuit assigned to the identified destination to this time slot. The calling party is now connected via the switching network of the telephone switching system to the designated destination through the use of the call transfer between message service system and a telephone switching system capability of the business communication system.

In the case where the telephone switching system cannot complete the call transfer operation, the switch processor transmits a FAIL control message to the message service system to indicate the cause of the incomplete call transfer operation. The message service system notifies the calling party of the failed call transfer operation so the calling party can conduct additional business on the message service system.

An additional capability is the call transfer from an existing call connection between a calling party and a trunk or telephone station set to a message service system. A calling party, connected through the telephone switching system to either a trunk or a telephone station set, invokes the call transfer capability by transmitting control signals which indicate a request for a call transfer to an identified message service system to the switch processor. The switch processor responds to this call transfer request by removing the trunk or telephone station set from the time slot assigned to the calling party in the telephone switching system switching network. The telephone switching system then adds to this time slot a communication connection to one of the voice ports of the message service system designated by the calling party.

A calling party can thereby transfer the call between the various message service systems and any of the trunks and telephone station sets served by the telephone switching system without having to originate another call.

### Brief Description of the Drawings

FIG. 1 illustrates the subject business communication system in block diagram form;
FIG. 2 illustrates the voice mail service system in block diagram form;
FIG. 3 illustrates the data channel interface unit in block diagram form; and
FIGS. 4 and 5 illustrate, in flow diagram form, the operation of the subject business communication system to provide the call transfer between a message service system and a telephone switching system.

### Detailed Description

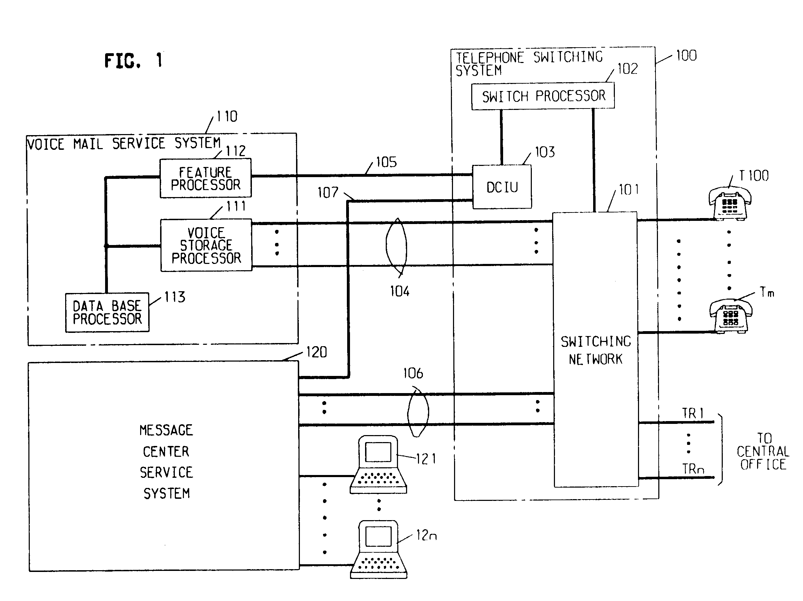

The subject business communication system is shown in block diagram form in FIG. 1. A key element of this business communication system is a stored program controlled telephone switching system 100 which provides business communication services to a plurality of trunk circuits T1-Tn and telephone station sets T100-Tm. Included in telephone switching system 100 is a switching network 101 for establishing communications connections among telephone station sets T100-Tm and trunk circuits T1-Tn. A switch processor 102 controls the operation of telephone switching system 100. The business communication system of FIG. 1 includes several message service systems: voice mail service system 110 which electronically stores and forwards voice messages, and message center service system 120 which provides operators at consoles 121-12n to record messages in text form for callers. These systems are known in the art and, to illustrate the subject call transfer between a message service system and a telephone switching system, voice mail service system 110 will be described in further detail below.

Telephone switching system 100 provides each telephone station set T100-Tm and trunk circuit T1-Tn with access to message service systems such as voice mail service system 110. An individual can directly call voice mail service system 110 from one of telephone station sets T100-Tm or trunk circuits T1-Tn or can redirect their incoming calls from their associated telephone station sets T100-Tm to voice mail service system 110. Telephone switching system 100 provides a control message communication link from switch processor 102 via data communication interface unit (DCIU) 103 and data link 105 to voice mail service system 110 to exchange call related information such as: new call, call disconnect, message waiting indication control, etc.

### Voice Mail Service System Overview

An individual accesses voice mail service system 110 to, for example, generate a voice mail message by going off hook on their associated telephone station set T100 and dialing the voice mail service system access number. Switch processor 102 receives and decodes the dialed number in well-known fashion and connects telephone station set T100 to one of the voice mail service access lines 104 via switching network 101. This establishes a voice communication connection from telephone station set T100 via switching network 101 and voice mail service access line 104 to voice mail service system 110.

Switch processor 102 also simultaneously transmits a control message identifying the calling party to voice mail service system 110 through data communication interface unit 103 and over data link 105. Once a control message comes over data communication interface unit 103 from telephone switching system 100 announcing a new call, voice storage processor 111 and feature processor 112 interact directly with the calling party to provide the required message service features. Voice storage processor 111 controls the sequencing of the telephone call connection until a disconnect signal is received from the calling party. Voice storage processor 111 is comprised of many different elements working together to provide voice encoding capability. The hardware necessary to digitize voice and successfully buffer it before storing it in data base processor system 113 is part of voice storage processor 111.

Feature processor 112 provides the various system level features associated with voice mail service, such as mailing lists, message delivery, etc. Data base processor 113 serves as a mass storage element to store all the digitally encoded voice signals as well as control algorithms used by voice storage processor 111 and feature processor 112. Additional details of voice mail service system 110 are disclosed below.

### Call Transfer Operation

Feature processor 112 is the element in voice mail service 110 that communicates with switch processor 102 of telephone switching system 100 to provide the call transfer capability in voice mail service system 110. To illustrate the operation of the call transfer from a message service system capability, assume that an individual at telephone station set T100 is connected through switching network 101 of telephone switching system 100 to voice mail service system 110 via one of voice mail service access lines 104. The individual at telephone station set T100 activates the desired features of voice mail service system 110 in well known fashion by simply dialing a code to designate the feature desired. The individual at telephone station set T100 invokes the call transfer capability by simply dialing *T followed by a destination number. Voice storage processor 111 detects the tone signals dialed by the individual at telephone station set T100 and decodes the *T dialed by the individual and transmits control signals to feature processor 112 to indicate that the individual at telephone station set T100 has dialed *T. Feature processor 112 responds to the *T dialed by the individual at telephone station set T100 by transmitting a call transfer request control message over data link 105 and DCIU unit 103 to switch processor 102 of telephone switching system 100. This call transfer request control message contains pertinent call related information which includes: identification of the transferring party, identification of the originally called party, reason for the original call going to the message service system, address digits for the alternate destination and the identity of the voice mail service system port requesting the call transfer capability. Switch processor 102 responds to the call transfer control message by initiating a standard call transfer operation in telephone switching system 100. If the transfer can be completed, switch processor 102 transmits a disconnect control message through DCIU 103 and data link 105 to feature processor 112 of voice mail service system 110. The disconnect message identifies the port on voice mail service system 110 that has requested the call transfer operation. Feature processor 112 of voice mail service system 110 responds to the disconnect control message by signaling voice storage processor 111 to disconnect the voice communication connection to telephone station set T100 on the identified voice mail service system port serving telephone station set T100. Switch processor 102 then initiates a new call connection through switching network 101 from station set T100 to the identified alternate destination represented by the address digits dialed by the individual at telephone station set T100. Assume for the purpose of this discussion, that the alternate destination is telephone station set Tm. Switching network 101 establishes a voice communication connection from telephone station set T100 to telephone station set Tm, thereby completing the call transfer operation.

### Call Transfer Alternatives

There are a number of alternatives in the above described process available to the individual at telephone station set T100. One alternative is that the individual can either transfer the existing call connection to a pre-defined default alternate destination or can specify a specific alternate destination. For example, assume that the individual at telephone station set T100 had dialed telephone station set T101 (not shown) and the call was not answered at telephone station set T101 but as part of the call coverage path for that telephone station set the call was routed to voice mail service system 110. The individual at telephone station set T100 has the option when connected to voice mail service system 110 to leave a voice mail message for the called party (the absent subscriber associated with telephone station set T101) or to redirect the call from the voice mail service system 110 to any other telephone station set, trunk circuit or message service system that is part of the business communication system.

A first alternative is that the individual at telephone station set T100 can transfer the call from voice mail service system 110 to a default alternate destination, such as message center service system 120. To accomplish this, the individual at telephone station set T100 simply dials *T, no other digits and #. The *T without any additional dialed digits is indicative to feature processor 112 that the individual at telephone station set T100 is requesting transfer to the default alternate destination associated with the original called party (telephone station set T101). Feature processor 112 uses the called party identification to determine the pre-defined default alternate destination or 'pseudo coverage' path assigned to telephone station set T101. For the purpose of this example assume that the default alternate destination for telephone station set T101 is message center service system 120. Feature processor 112 transmits a call transfer request control message to switch processor 102 over data link 105 and DCIU 103 that includes digits identifying the default destination (message center service system 120). Switch processor 102 activates switching network 101 to establish a new call connection from telephone station set T100 through switching network 101 and message center access lines 106 to message center service system 120 where the call connection is completed to one of the operator positions, for example, 121. The individual at telephone station set T100 can now leave a message for the called party by way of the message center operator at operator position 121. The operator at operator position 121 types a text message into message center service system 120 in response to the information provided by the individual at telephone station set T100 and, in well known fashion, the text message is made available to the individual at telephone station set T101.

A second alternative called transfer operation is where the individual at telephone station set T100 designates an alternate destination for the call. As above, when the individual at telephone station set T100 calls telephone station set T101 and the unanswered call is redirected to voice mail service system 110, the individual at telephone station set T100 can transfer this call connection to an alternate destination. The individual at telephone station set T100 dials *T and then dials the station number of an alternate destination, for example, telephone station set Tm followed by #. Feature processor 112 responds to the *T and Tm dialed digits by transmitting a call transfer request control message over data link 105 and DCIU 103 to system processor 102. System processor 102 responds to the call transfer request control message containing address digits identifying an alternate destination as above by transmitting a disconnect control message to feature processor 112 to disconnect the existing call connection between telephone station set T100 and voice mail service system 110 over one of voice mail service access lines 104. System processor 102 then activates switching network 101 to create a new call connection from telephone station set T100 to the alternate destination designated by the address digits dialed by the individual at telephone station set T100. In this case the alternate destination is telephone station set Tm.

In this manner an individual whose call has been directed to one of the plurality of message service systems can effectuate a call transfer operation to redirect the call from the message service system to an alternate destination. The alternate destination can be either another message service system or any telephone station set or trunk circuit that is part of the business communication system.

A third alternative is the "return the call" operation, where the calling party retrieves a message from the message service system and wishes to return a call to the message originator. The calling party at telephone station set T100 dials the code digits for "return the call" and, as described above, the message service system identifies the alternate destination and effectuates a call transfer operation to transfer this call connection to the identified alternate destination.

The details of the call completion and data message structure will be discussed below. The structure of voice mail service system 110 and data communication interface unit 103 are first described to provide background for that description.

### Voice Mail Service System

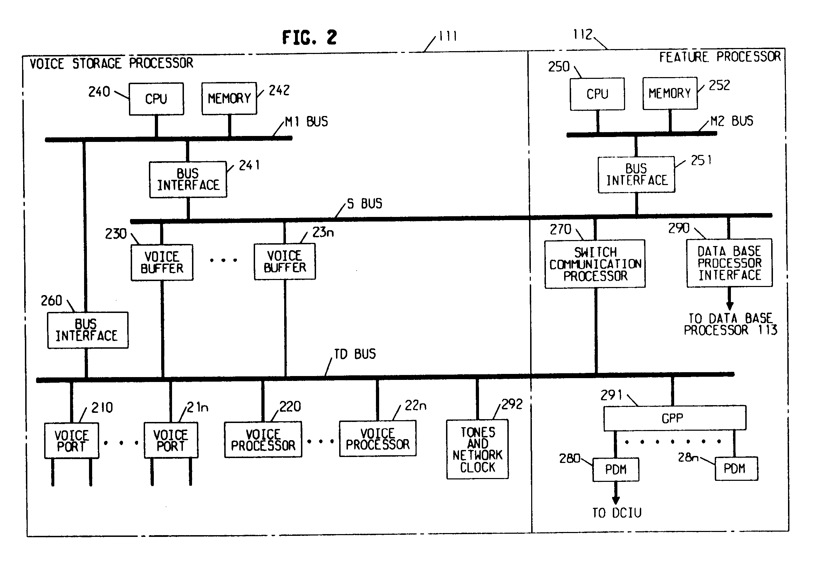

Voice mail service system 110 is disclosed in block diagram form in FIG. 2. This system comprises three main elements: voice storage processor 111, feature processor 112 and data base processor 113 (not illustrated). Broadly stated, the voice storage processor controls the following:
a. Keeping track of control information about current voice messages being played or recorded, including where in the message the caller stopped playback, and whether the caller is playing back or recording.
b. Opening voice channels in preparation for recording or playback.
c. Closing voice channels to end recording or playback.
d. Controlling playback speed.
e. Controlling playback volume.
Feature Processor 112 controls the following functions:
a. Controlling message headers--how they are read and created.
b. Concatenating two messages together, or duplicating a voice message.
c. Erasing a message (includes telling the data base processor system to deallocate all extents associated with this message).
d. Rewinding a message.
e. Keeping track of problems so that information can be provided to the caller when questions arise.
f. Retrieving messages from a caller's mailbox and preparing to play back both the message summary and the message body.
g. Skipping to the next message (if any).
h. Saving a message for later playback (becomes an old message in the mailbox).
i. Verifying the password typed in by the caller.
j. Retrieving distribution lists to later send out messages.
k. Controlling the delivery of messages.
l. Storing a working message, one per subscriber.
m. Retrieving initial lists of all messages (both new and old) in a user's mailbox.
n. Deleting a message and clearing up the disk space for later use.
o. Retrieving a list of outgoing messages to report the status of each.
p. Canceling the delivery of a piece of undelivered mail.
q. Notifying system processor when all messages are accessed.

### Data Base Processor

Data base processor system 113 is a back-end file system and data base machine. As a back-end processor, data base processor system 113 serves to offload file system and data base operations from voice storage processor 111. It also provides all the non-volatile storage used by voice storage processor 111.

Both voice and non-voice files are stored by data base processor system 113 for voice mail service system 110. The voice files will include announcements and messages. The non-voice files will include system programs, system data, and user data. Data base processor system 113 provides basic file system support for voice mail service with functions which include, but are not limited to: File system management functions (e.g., create, modify, delete, backup, recover, and report status of files and file systems); File manipulation functions (e.g., insert, modify, delete data in a file); File level concurrency control functions; Data base processor system administration functions; Data base processor system maintenance functions.

### Voice Processors

Voice processors (220-22n) and voice ports (210-21n) take care of the following physical operations: touch-tone signal receiving; answer, disconnect; ring detection; digit queuing; bandwidth compression (compress the voice data from 64k bits/s down to 16k bits/s) and expansion; silence compression (encode the length of long silences so that the encoded length value rather than the actual silent interval can be stored on disk) and expansion; playback speed control (speed-up or slow-down the rate of playback); playback volume (louder or softer); automatic gain control; per port timing (inter-token timing); freezing a voice channel to temporarily stop recording or playback; applying audible tone right before recording to signal the caller to begin; monitoring how much is recorded, and freezing the channel when a maximum is reached.

### Voice Interface Operation

Telephone switching system 100 establishes a voice communication connection from an individual at telephone station set T100 to one of voice mail service access lines 104, and applies ringing signal to the selected voice mail service access trunk. No action is taken by voice mail service system 110 due to this ringing signal. The call will be answered without regard to the presence or absence of ringing on the associated voice mail service access trunk when a connect message identifying an incoming call on one of voice mail service access lines 104 is transmitted to voice mail service system 110 by system processor 102 via data communication interface unit 103 and data link 105. After closing the loop on the identified voice mail service access line 104 as an answer signal, voice storage processor 111 monitors the flow of loop current on this trunk to insure a complete connection.

When telephone switching system 100 disconnects a call from a voice mail service access line 104, no immediate signal is sent over voice mail service access line 104 to voice mail service system 110. The loop is opened on voice mail service access line 104 for a time sufficient to be recognized as an on-hook signal by telephone switching system 100 when a disconnect message identifying an existing connection is received by voice storage processor 111.

An individual at telephone station set T100 activates the desired feature of voice mail service system 110 in well known fashion by simply dialing a code designating the desired feature. To illustrate, assume the user wishes to create a voice message for transmittal to a number of destinations. The user dials the "create" digit on telephone station set T100, which dialed digit is transmitted via the voice communication connection to voice port 210 and thence via TD bus to tone detector circuit 292. Tone detector circuit in voice processor 220 decodes the dialed digit and transmits a data message to CPU 240 via TD bus, bus interface 260 and M1 bus. CPU 240 interprets this data message and causes a voice connection to be established from voice port 210 to a voice processor 220 where the voice message is converted to digitally encoded voice signals. These voice signals are transmitted via TD bus, a selected voice buffer 230, S bus, data base processor interface 290 to data base processor 113 where the encoded voice is stored for later retrieval.

This voice mail service system 110 outlined above is a standard commercially available voice mail service system known as AUDIX that is available from AT&T Information Systems. The exact operation of this system is not of paramount importance, but is described in general fashion to provide a better understanding of the subject call transfer from a message service system capability. The data communication segment of this arrangement is now disclosed to illustrate the apparatus that interconnects system processor 102 with voice mail service system 110 to provide the call transfer from a message service system capability.

### Data Communication Interface Unit

The Data Communication Interface Unit (DCIU) 103 of telephone switching system 100 is used to connect voice storage processor 111 to system processor 102. Data communication interface unit 103 and other hardware components, the protocol, and the types of messages on this interface are described in this section.

Data communication interface unit 103 is necessary for the operation of voice mail service system 110. Voice storage processor 111 needs a connect message to know when to answer an incoming call on voice mail service access lines 104, because it does not act on ringing on the voice mail service access lines 104. The connect message also informs voice storage processor 111 if the call is a Voice Mail call or a Call Answer call and provides the calling party identification. Data communication interface unit 103 is needed for the control of the automatic message waiting indicators, and the integration of the lamp message waiting indication feature with other services.

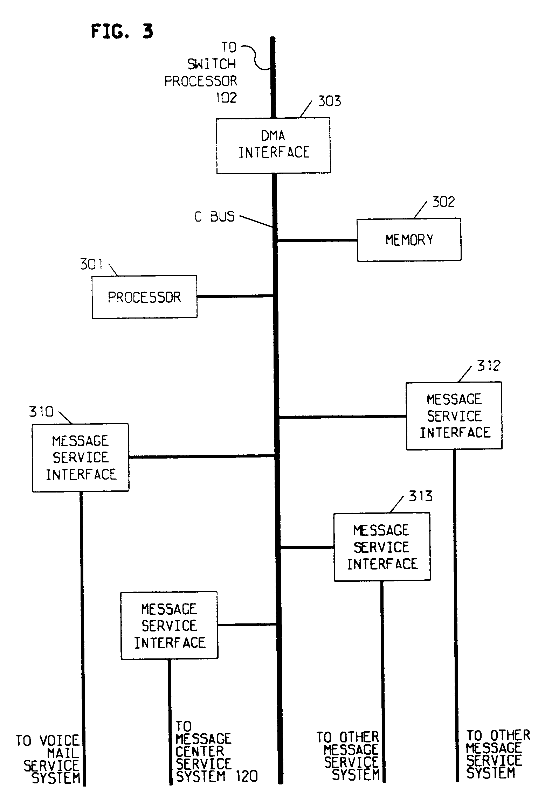

The general structure of data communication interface unit 103 is illustrated in FIG. 3 in block diagram form. This circuit is a data transfer arrangement that functions to transmit a message from a main memory to a communication channel. Such circuits are well-known and U.S. Patent No. 4,133,030 describes one such arrangement. U.S. Patent No. 4,133,030 provides a block transfer arrangement but the concepts taught therein are applicable to the message transmission arrangement of data communication interface unit 103.

The operation of data communication interface unit 103 is controlled by processor 301 that is programmed by software stored in memory 302. Processor 301 responds to message arriving either at interface 303 from system processor 102 or at message services interface 310-313 from one of the message service systems by reading the message from the receiving interface circuit via common bus CBUS. The message is routed by processor 301 to the interface circuit that serves the intended destination. This is described in further detail below.

### Protocol Between Voice Mail Service System 110 and Telephone Switching System 100

The sections that follow summarize the relevant points of the protocol.

### Physical-Layer 1

Data communication interface unit 103 communicates with other devices through the physical data links. The data communication interface unit 103 has 8 data links for connecting system processor 102 to a maximum of 8 other processors. Also, it can provide a connection between any of the other processors without involving system processor 102. (See U.S. Patent No. 4,488,004 for additional details.) Each data link will have a maximum 19.2k bits/s data rate. A DMA interface circuit 303 is used to connect data communication interface unit 103 to processor 102. However, it is appropriate to regard this DMA connection as a ninth Data link. In summary, data communication interface unit 103 will support 9 data links, one of which is a connection to system processor 102 via DMA interface 303.

The data communication interface unit 103 communication with voice storage processor 111 is through a Processor Data Module (PDM)(280-28n), which is in turn connected to the General Purpose Port (GPP) 291 on the voice storage processor 111 side. On the voice storage processor 111 side, the general purpose port 291 is connected to switch communication processor 270 through the TD bus. General purpose port 291 will provide a total of 4 physical links. One will be connected to data communication interface unit 103 via processor interface module 280 and the others will be available for connections to other devices, via other processor interface modules. The conceptual view of these data links is that these are 5 data links; 4 are physical cables that are connected to general purpose port 291, the fifth data link is the DMA connection across the S bus to Feature Processor CPU 250.

### Data Link-Layer 2 and Packet-Layer 3

Level 2 handles the sending of packets of data over the physical link and provides flow control, error detection, and error recovery.

Level 3 creates logical channels that are used to multiplex packets over one data link. Each data link in the data communication interface unit 103 will support 64 logical channels, that can be uniquely identified with the data link number and logical channel number.

On the system processor 102 side of the interface, data communications interface unit 103 handles levels 2 and 3 of the protocol. The data link between system processor 102 and data communication interface unit 103 can support a maximum of 64 logical channels.

All message transmission through data communication interface unit 103 is done through a network channel. A network channel is the name for a connection between 2 logical channels. It is made by mapping a logical channel data link pair to a logical channel data link. Logical channels and therefore network channels support bi-directional communication.

Although there are 64 logical channels on each of the links, not all of these can be used because there is a limit of 128 network channels on each data communication interface unit 103.

On the feature processor 112 side of the interface, the Data Link-Layer 2 and the Network-Layer 3 is handled by switch communication processor 270. Switch communication processor 270 is connected to the Time Division (TD) bus and connected to feature processor CPU 250 by means of S bus, bus interface 251 and M2 bus. Bus interface 270 provides the layers of protocol provided by data communication interface unit 103.

### Session Layer of the Protocol

The session layers correspond to a subset of the combination of the following International Standard Organization (ISO) protocol model layers: the transport layer 4, the session layer 5, and the presentation layer 6. The session layer is called the level 4, it is concerned with sequencing of messages and uses level 3 to provide end to end confirmation of messages. At the boundary between levels 3 and 4, the level 3 logical channels are mapped, one to one, to ports in level 4. These logical channels and ports are translated one to one in numerical order.

In system processor 102, each Application program talks to data communications interface unit 103 via the DCIU Interface Program (DIP). The DCIU interface program implements the session layer of the protocol, and DCIU interface program serves as an interface between data communications interface unit 103 and the system processor application programs.

In voice mail system 110, the session layer is handled in the VMS Interfaces Program (VIP) that resides on feature processor 112. VIP also communicates with other voice storage processor 111 application processes and passes information between them and system processor 102.

### Application Messages

Data communication interface unit 103 performs a switching function as outlined above. Both system processor 102 and the various message service systems 120 can originate messages which are transmitted through data communication interface unit 103 to a designated destination. The messages transmitted are discussed below and clarify the routing of the message through data communication interface unit 103.

The following descriptions of the content of each message are logical descriptions and not physical formats for implementation. Each message contains a message opcode followed by the content of the message.

### System Processor 102 to Voice Storage Processor 111

CONNECT MESSAGE. When a call is switched to one of the voice mail service access lines 104 connected to voice storage processor 111, the appropriate information is sent to voice storage processor 111 in a Connect Message. The voice storage processor 111 voice port to which the call is connected is identified by using the ringing extension number. The content of the message is shown below.
Connect - opcode and identification of the message service system.
Ringing Extension - extension number of the port receiving that call.
Call Type - indicates whether calling party is a trunk or a line. If the call is on a trunk it is 'external.' If the call is on a line, it is 'internal.' The opcodes are: (0) means line; (1) means trunk.
Calling Party - is the trunk group number or extension number of the calling party depending on the Call Type.
Reason for Call - why the call is being sent to VMS. The possible reasons are:
Direct - VMS is being called directly.
Redirected - The call was redirected to VMS.
Called Extension - is the original extension number being called. This can be ignored for calls with reasons of type Direct, because it would be the same as the Ringing Extension or Associated Extension.
Switch Message Waiting Indicator Status - is a bit map of the message waiting indicator status of the calling extension for each of several message service systems that use the message waiting indicator.

Thus, the message includes both an opcode and an indication of the destination to which this message is intended. Processor 301 decodes the opcode and destination information to determine the one of message service interfaces (ex. 310) to which the message is routed by processor 301. Message service interface 310 responds to a message received from processor 301 over CBUS by transmitting the message to voice mail service system 110 via data link 105.

The transmitted message is received (as described above) by PDM 280 and routed through general purpose port 291, TD BUS, switch communication processor 270, S BUS, bus interface 251, M2 BUS to feature processor CPU 250. Feature processor CPU 250 responds to the received message in standard fashion to complete the voice connection from telephone station set T100 to voice mail service system 110 via the selected voice port (ex. 210).

DISCONNECT MESSAGES. When the user of VMS goes on hook, system processor 102 notifies voice storage processor 111 the call has terminated.
Disconnect - opcode for disconnect, reason for disconnection and identification of the message service system.
Ringing Extension - ringing extension of the port in the call.

### Initiation of a Call Transfer Operation

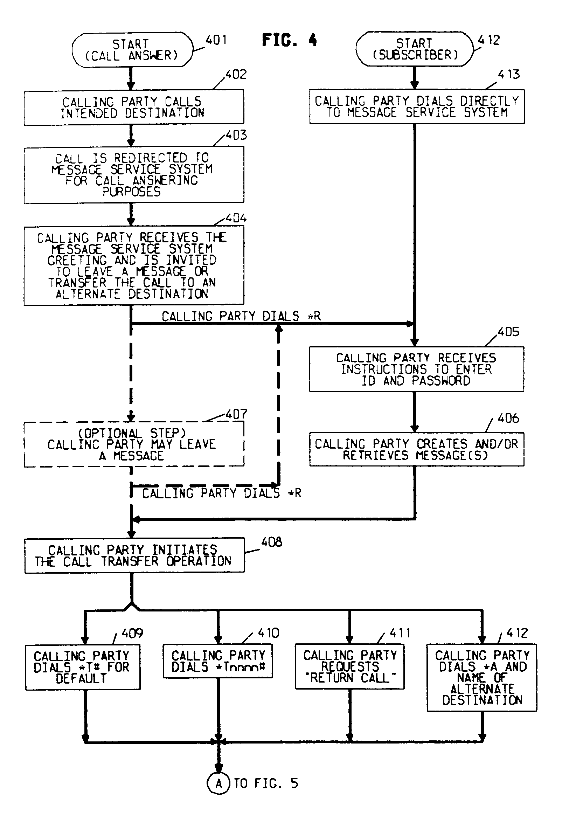

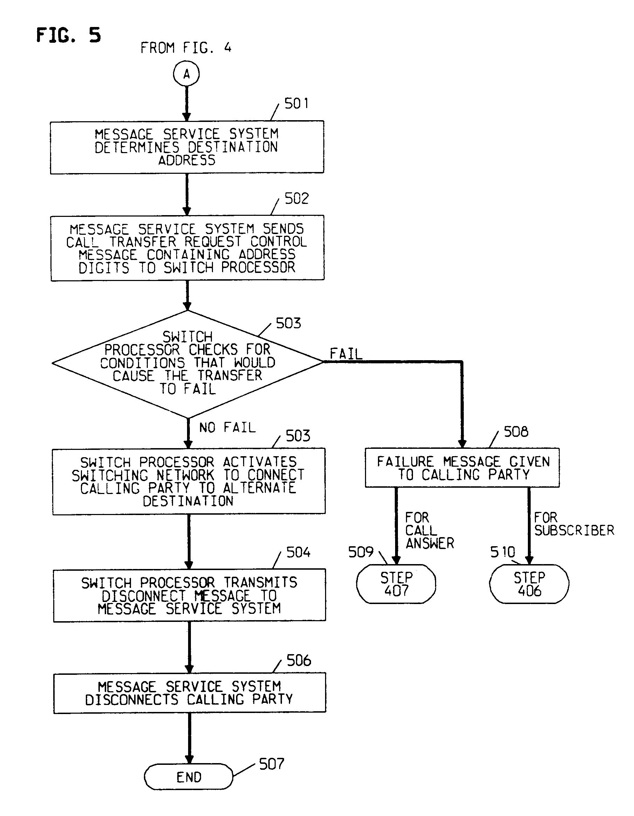

FIGS. 4 and 5 illustrate in flow diagram form the processing of a request for a call transfer between a message service system and a telephone switching system. A calling party is connected to a message service system in one of two ways. Element 401 on FIG. 4 illustrates the starting point of a first manner in which a calling party is connected to a message service system. In this case the calling party, for example an individual calling into the business communication system to telephone station set T100, has their call enter telephone switching system 100 over central office trunk T1 through switching network 101 telephone station set T100 (element 402). Assume for the purpose of this description that the individual subscriber at telephone station set T100 is unavailable. The call after a certain pre-determined number of rings will be redirected (element 403) to a message service system defined by the user at telephone station set T100. Assume that the user at telephone station set T100 has designated the voice mail service system 110 as the call coverage path for telephone station set T100. The calling party on central office T1 will have the incoming call routed by the telephone switching system 100 to the call coverage point voice mail service system 110 through switching network 101 and voice mail service access line 104 after telephone station set T100 has remained unanswered for pre-determined number of ring cycles.

The calling party is now connected through the switching network 101 and one of voice mail service access lines 104 to voice mail service system 110. As described above, the calling party is connected to voice mail service system 110 by one of the voice ports, for example 210, in voice storage processor 111. In response to the calling party connection to voice port 210, CPU 240 signals CPU 250 by way of M1 bus, bus interface 241, S bus, bus interface 251 and M2 bus that a calling party is now connected to voice port 210. CPU 250 signals data base processor 113 via M2 bus, bus interface 251, S bus and data base processor interface 290 to retrieve a standard greeting to be played to the calling party connected to voice port 210. The standard call answer greeting is as follows: "Your call is being answered by the Audio Information Exchange Service. (Called party's name), extension (called party's extension number) is not available at this time. If your telephone has touch-tone keys, you may transfer your call to an alternate destination by pressing * followed by T. To leave a message, record at the tone." Data base processor 113 retrieves this standard greeting message in digitally coded form from the data base and transmits it via data base processor interface 290, S bus to voice buffer 230. Voice buffer 230 buffers this greeting and delivers it to voice processor 220 via TD bus. Voice processor 220 translates the data received from data base processor 113 into a voice signal and relays the same via TD bus to voice port 210 where the standard greeting is played back over the call connection to the calling party. This operation described above is represented on FIG. 4 as element 404.

### Message Options

The calling party has several options available at this point. The calling party can leave a message for the called party, transfer the call to an alternate destination or, if the calling party is also a subscriber to this message service, initiate an independent call transaction or terminate the call. Assume, for the purpose of this description, that the calling party elects to leave a message for the called party. The call progresses to element 407 on FIG. 4 where the calling party leaves a voice message for the called party on voice mail service system 110 in well known fashion.

At the conclusion of the message creation session, the user can transfer the call, terminate the call or initiate a new voice mail call transaction. Assume, for the purpose of this description, that the calling party is also a subscriber to this message service and initiates a new voice mail call transaction. This is accomplished by the calling party dialing *R. These dialing signals are transmitted over the call connection on one of voice mail service system lines 104 to voice port 210 and thence via TD bus to tone detector circuit 292. Tone detector circuit 292 and voice processor 220 decode the dialed digits and, as a result thereof, signal CPU 240 that a request for a new voice mail call transaction has been received from the calling party connected to voice port 210.

The calling party call connection is now at element 405 on FIG. 4 which is operationally the same situation as the subscriber method of accessing a message service system illustrated starting at element 412 on FIG. 4, wherein the same calling party accesses a message service system (element 413) to either create and/or retrieve messages from that message service system. For example the calling party again at the remote location calls into the business communication system over central office trunk T1 and directly accesses voice mail service system 110. Telephone switching system 100 establishes a call connection from central office trunk T1 through switching network 101 to voice mail service system 110 via one of voice mail service access lines 104.

An additional method of accessing a message service system is via a call transfer from a standard call connection. Assume the calling party at the remote location calls into the business communication system over central office trunk T1 and establishes a call connection to telephone station set T100 via switching network 101. The calling and called parties can initiate a call transfer operation in the standard fashion, signaling switch processor 100 to indicate that calling party on central office trunk T1 requests connection to voice mail service system 110 via one of voice communication lines 104. Switch processor 100 in response to this request activates switching network 101 to establish a new call connection from central office trunk T1 to one of voice communication lines 104. The calling party call connection is now at element 405 on FIG. 4.

The calling party is prompted by voice mail service system 110 as described above for the standard call answer greeting. In this case, however, the prompt is: "Welcome to the Audio Information Exchange. Please enter your extension number followed by #. (calling party enters number) Please enter your password followed by #. (calling party enters password)." The calling party is now at element 406 on FIG. 4 where a new voice mail call transaction has been initiated and the calling party can create and/or retrieve messages. The calling party can, at the conclusion of this call transaction(s) either terminate the call or transfer the call to an alternate destination.

### Call Transfer Options

For the purpose of this discussion assume that the calling party initiates a call transfer operation. This action by the calling party is represented on FIG. 4 as element 408. Upon termination of the prior call transaction session, the standard call transfer instruction message is as follows: "Enter the extension followed by the # sign. To transfer by specifying names instead, press *A. To reach the person covering this extension, press the # sign to return this call to the sender dial 0." Data base processor 113 retrieves this standard call transfer instruction message in digitally coded form from the data base and transmits it via data base processor interface 290, S bus to voice buffer 230. Voice buffer 230 buffers this message and delivers it to voice processor 220 via TD bus. Voice processor 220 translates the data received from data base processor 113 into a voice signal and relays the same via TD bus to voice port 210 where the standard call transfer instruction message is played back over the call connection to the calling party.

The calling party can perform one of these four operations to activate the call transfer capability. If the calling party presses *A (element 412 on FIG. 4) a further message is provided (in the manner described above) to the calling party by voice mail service system 110 as follows: "Enter the name, followed by the # sign." The calling party can dial *T# to transfer the call to the default alternate destination, that is, the destination which provides call coverage for the called party (element 409). The calling party can dial *Tnnnn# where the nnnn indicates the station number of an alternate destination selected by the calling party (element 410). The final alternative is where the calling party is in a call answer mode (following the call path specified by elements 401-404, 408) and the calling party elects to return the call to the message originator rather than leaving a message on voice mail service system 110. The calling party activates this option by dialing 0 (element 411).

As a result of the calling party activating the call transfer capability by performing one of the four above-described operations, the called party dialed digits are received by voice port 210 and transmitted by TD bus to tone detector circuit 292. Tone detector circuit 292 and voice processor 220 decode the dialed digits and, as a result thereof, transmit a data message to CPU 240 via TD bus, bus interface 260 and M1 bus. CPU 240 interprets this data message and transmits a control message via M1 bus, bus interface 241 S bus, bus 251 and M2 bus to CPU 250 to indicate that the call transfer capability has been requested by the calling party connected to voice port 210. CPU 250 determines the identity of the alternate destination (element 501) either directly from the dialed digits (element 410) or by translating the dialed digits to the identity of the alternate destination (element 409, 411, 412). The translation is accomplished by using the dialed digits to retrieve the associated data from the data base managed by data base processor 113. In the default destination case (element 409), the translation comprises retrieving the identity of the default destination associated with the called party's station number from the default destination table (not shown) in the data base. The return call case (element 411) involves using the identity of the message originator as stored with the message originally recorded on the data base. Finally, the dialed name (element 412) translation comprises retrieving the called party's station number from a directory stored on the data base wherein each message service system subscriber and their corresponding station number is listed.

Upon completion of the destination identification operation, CPU 250 generates a call transfer request control message which has the following content:
Transfer opcode and identification of the message service system
Requesting extension - subscriber identification and extension number of the message service system port circuit serving this call.
Call Type - indicates whether the calling party is a trunk or line. If the call is on a trunk it is 'external'. If the call is on a line, it is 'internal'. The opcodes specify whether the call is a line or trunk.
Called Extension - is the original extension number being called.
Reason for Call - why the call was originally sent to the message service system. The possible reasons are:
Direct - the message service system is called directly or
Redirected - the call was redirected to the message service system as a call coverage operation.
Destination Address - the identification of the alternate destination.

CPU 250 creates the above identified call transfer request control message and transmits same via M2 bus, bus interface 251, S bus, switch communication processor 270, TD bus, general purpose circuit 291, processor interface module 292 to DCIU unit 103 over data link 105. As described above, the call transfer request control message is switched through DCIU 103 to switch processor 102. The above described operation is summarized by element 502 on FIG. 5.

In response to the call transfer request control message received from voice mail service system 110, switch processor 102, checks for conditions which would cause the call transfer operation to fail (element 503). These conditions can be one of a number of causes, such as invalid number dialed. If switch processor 102 detects that the call transfer operation cannot be completed, switch processor 102 transmits a failure control message (element 508) via DCIU 103, data link 105 to voice mail service system 110 where the failure control is decoded and an appropriate prerecorded audible translation of the failure control message is provided to the calling party (in the manner described above). The calling party is then returned to their pre-call transfer request status at either element 509 or 510.

If the call transfer operation can be effectuated, element 504 on FIG. 5 illustrates the next operation involved in the call transfer sequence. Switch processor 102 signals switching network 101 to establish a new call connection from the calling party identified on the call transfer request message through switching network 101 to the alternate destination also identified in the call transfer request control message. In this example, there are two possible alternate destinations that can be selected by the calling party. In one case, the calling party can designate a specific alternate destination, for example, telephone station set Tm by either name or extension number. In that case switch processor receives data in the call transfer request control message indicating the dialed digits transmitted by the calling party indicative of the alternate destination whether name or extension number. Switch processor 102 signals switching network 101 to establish a new call connection from central office trunk T1 serving the calling party to the designated alternate destination telephone station set Tm. At step 504 FIG. 5 the switching network 101 establishes this call connection.

A second option available to the calling party is to simply dial *T in requesting a call transfer operation to have the call routed to a predesignated alternate destination following a pre-defined 'pseudo coverage' path. In this case, switch processor 102 responds to the call transfer request control message specifying no alternate destination by searching the telephone switching system station memory (not shown) wherein an alternate destination or second step in the call coverage path associated with telephone station set T100 is defined. Switch processor 102 uses this alternate destination definition which for example can be message center system 120 to establish a new call connection from the calling party to this alternate destination. In the case of message center system 120 being designated as the default destination, switch processor 102 activates switching network 101 to establish a new call connection from central office trunk T1 serving the calling party to one of message center access lines 106 to connect the calling party to message center 120 and therein to an attendant at, for example, operator position 121. The attendant at operator position 121 can transcribe a message provided by the calling party into the message center memory for later retrieval by the subscriber associated with telephone station set T100.

Following the establishment of a new call connection, switch processor 102, as described above, transmits a disconnect message through DCIU 103 and data link 105 to voice mail service system 110. This operation is indicated on FIG. 5 by element 505. Element 506 on FIG. 5 indicates the response of voice mail service system 110 to the disconnect control message received from system processor 102. The operation of voice mail service system 110 in response to a disconnect message is described above and, in summary, involves voice port 210 opening the loop on the existing call connection for a sufficient time to be recognized as an on-hook signal by telephone switching system 100. This disconnect operation completes the call transfer process at element 507.

While a specific embodiment of the invention has been disclosed, variations in structural detail, within the scope of the appended claims, are possible and may be devised by those skilled in the art.

## Claims

1. A method of operating a business communication system including a telephone switching system (100) for serving a plurality of telephone station sets (T100-Tm) and trunk circuits (TR1-TRn), a message service system (110) connected to said telephone switching system (100) via one or more voice communication paths (104) and at least one data link (105) for exchanging control messages therebetween, the method being for providing a calling party (T100) on an existing call connection to either one of said voice communication paths (104) or one of said plurality of telephone station sets (T100-Tm) and trunk circuits (TR1-TRn) with a call transfer capability between said voice communication paths (104) of said message service system (110) and said plurality of telephone station sets (T100-Tm) and trunk circuits (TR1-TRn) of said telephone switching system (100), and CHARACTERIZED BY the steps of:
receiving, in said business communication system, a call transfer request from said calling party (T100) on said existing call connection, identifying an alternate destination for said existing call connection wherein said alternate destination includes one of said plurality of telephone station sets (T100-Tm) and trunk circuits (TR1-TRn) when said existing call connection is to one of said voice communication paths (104), and one of said voice communications paths (104) when said existing call connection is to one of said plurality of telephone station sets (T100-Tm) and trunk circuits (TR1-TRn);
exchanging call transfer control messages via said data link (105) between said message service system (110) and said telephone switching system (100) identifying said existing call connection and said alternate destination; and
substituting, in said telephone switching system (100), a new call connection from said calling party (T100) to said identified alternate destination in place of said existing call connection.

2. A method as claimed in claim 1 wherein the step of receiving includes the steps of:
transmitting said call transfer request from said calling party (T100) to said message service system (110) via said existing call connection; and
translating, in said message service system (110), said call transfer request identifying said alternate destination into data identifying the one of said plurality of telephone station sets (T100-Tm) and trunk circuits (TR1-TRn) corresponding to said alternate destination.

3. A method as claimed in claim 1 wherein the step of exchanging includes the steps of:
testing, in said telephone switching system (100), to determine whether said new call connection can be established;
transmitting failure control messages from said switch processor (102) to said message service system (110) via said data link (105) when said new call connection cannot be established; and
broadcasting a failure announcement to said calling party (T100) via said existing call connection from said message service system (110) in response to the receipt of said failure control messages.

4. A telephone switching system (100) having a switch processor (102) for controlling the operation of said telephone switching system (100), connected to a message service system (110) by one or more communication lines (104), and a call transfer arrangement including means (105) connected to both said message service system (110) and said switch processor (102) for transferring control messages therebetween; CHARACTERIZED IN THAT said arrangement includes means (112), in said message service system (110), responsive to signals requesting transfer of an existing call connection via one of said communication lines (104) to said message service system (110) to an alternate destination, transmitted by a subscriber (T100) on said existing call connection, for transmitting a call transfer control message identifying said alternate destination to said switch processor (102) via said transferring means (105); and said switch processor (102) includes means (503-505) responsive to said call transfer control message for causing said telephone switching system (100) to establish a new call connection from said subscriber (T100) to said alternate destination in place of said existing call connection.

5. A switching system as claimed in claim 4 wherein said transmitting means (112) includes means (501) responsive to said signals requesting a call transfer to an alternate destination for translating said signals to data indicative of the identity of a telephone station set (T100-Tm) or trunk circuit (TR1-TRn) in said telephone switching system (100) corresponding to said alternate destination.

6. A switching system as claimed in claim 4 wherein said switch processor (102) includes means (503) responsive to said call transfer control message for testing to determine whether a new call connection can be established to said alternate destination; and means (508-510) responsive to the failure of said testing for returning a failure control message to said message service system (110) via said transferring means (105).

7. A switching system as claimed in claim 6 wherein said message service system (110) includes means (113), responsive to said failure control message, for broadcasting an announcement identifying the failure of said requested call transfer to said calling party (T100) via said existing call connection.

## Patentansprüche

1. Verfahren zum Betrieb eines Geschäftsnachrichtensystems einschließlich eines Fernsprechvermittlungssystems (100) zur Bedienung einer Vielzahl von Telefonapparaten (T100-Tm) und Übertragungen (TR1-TRn) und eines Nachrichtendienstsystems (110), das mit dem Fernsprechvermittlungssystem (100) über einen oder mehrere Sprachübertragungswege (104) und wenigstens eine Datenverbindungsleitung (105) zum Austausch von Steuernachrichten zwischen den Systemen verbunden ist,
wobei das Verfahren einem rufenden Teilnehmer (T100) einer bestehenden Gesprächsverbindung zu einem der Sprachnachrichtenwege (104) oder einem der Vielzahl von Telefonapparaten (T100-Tm) und Übertragungen (TR1-TRn) eine Umlegemöglichkeit zwischen den Sprachübertragungswegen (104) des Nachrichtendienstsystems (110) und der Vielzahl von Telefonapparaten (T100-Tm) und Übertragungen (TR1-TRn) des Fernsprechvermittlungssystems (100) bereitzustellen, gekennzeichnet durch die Schritte:
Empfangen, im Geschäftsnachrichtensystem, einer Umlegeanforderung vom rufenden Teilnehmer (T100) bei der bestehenden Gesprächsverbindung, Identifizieren einer alternativen Bestimmung für die bestehende Gesprächsverbindung, wobei die alternative Bestimmung einen bzw. eine der Vielzahl von Telefonapparaten (T100-Tm) und Übertragungen (TR1-TRn) umfaßt, wenn die bestehende Verbindung zu einem der Sprachübertragungswege (104) verläuft, und einen der Sprachübertragungswege (104) umfaßt, wenn die bestehende Verbindung zu einem bzw. einer der Vielzahl von Telefonapparaten (T100-Tm) und Übertragungen (TR1-TRn) verläuft,
Austauschen von Umlegesteuernachrichten über die Datenverbindungsleitung (105) zwischen dem Nachrichtendienstsystem (110) und dem Fernsprechvermittlungssystem (100), die die bestehende Verbindung und die alternative Bestimmung identifizieren, und
Aufbauen, im Fernsprechvermittlungssystem (100), einer neuen Verbindung vom rufenden Teilnehmer (T100) zur identifizierten alternativen Bestimmung anstelle der bestehenden Verbindung.

2. Verfahren nach Anspruch 1,
bei dem der Schritt für das Empfangen einer Umlegeanforderung die Schritte umfaßt:
Übertragen der Umlegeanforderung vom rufenden Teilnehmer (T100) zum Nachrichtendienstsystem (110) über die bestehende Gesprächsverbindung und
Umsetzen, im Nachrichtendienstsystem (110), der die alternative Bestimmung identifizierenden Umlegeanforderung in Daten, die der alternativen Bestimmung entsprechen, und den einen bzw. die eine der Vielzahl von Telefonapparaten (T100-Tm) und Übertragungen (TR1-TRn) identifizieren

3. Verfahren nach Anspruch 1,
bei dem der Schritt des Austauschens von Umlegesteuernachrichten die Schritte umfaßt:
Prüfen im Fernsprechvermittlungssystem (100), ob die neue Gesprächsverbindung hergestellt werden kann,
Übertragen von Fehlersteuernachrichten vom Vermittlungsprozessor (102) zum Nachrichtendienstsystem (110) über die Datenverbindungsleitung (105), wenn die neue Gesprächsverbindung nicht hergestellt werden kann, und Aussenden einer Fehleransage an den rufenden Teilnehmer (T100) über die bestehende Gesprächsverbindung vom Nachrichtendienstsystem (110) aus unter Ansprechen auf den Empfang der Fehlersteuernachrichten.

4. Fernsprechvermittlungssystem (100) mit einem Vermittlungsprozessor (102) zur Betriebssteuerung des Fernsprechvermittlungssystems (100), der an ein Nachrichtendienstsystem (110) über eine oder mehrere Übertragungsleitungen (104) angeschlossen ist, und mit einer Umlegeanordnung mit einer Einrichtung (105), die mit dem Nachrichtendienstsystem (110) und dem Vermittlungsprozessor (102) verbunden ist, um Steuernachrichten zwischen ihnen zu übertragen, dadurch gekennzeichnet,
daß die Anordnung eine Einrichtung (112) im Nachrichtendienstsystem (110) enthält, die unter Ansprechen auf von einem Teilnehmer (T100) der bestehenden Gesprächsverbindung übertragene Signale, die ein Umlegen der bestehenden Gesprächsverbindung über eine der Übertragungsleitungen (104) zum Nachrichtendienstsystem (110) an eine alternative Bestimmung anfordern, eine Umlegesteuernachricht aussendet, die die alternative Bestimmung über die Umlegeeinrichtung (105) für den Vermittlungsprozessor (102) identifiziert, und daß der Vermittlungsprozessor (102) eine Einrichtung (503-505) enthält, die unter Ansprechen auf die Umlegesteuernachricht das Fernsprechvermittlungssystem (100) veranlaßt, eine neue Gesprächsverbindung von dem Teilnehmer (T100) zu der alternativen Bestimmung anstelle der bestehenden Gesprächsverbindung aufzubauen.

5. Vermittlungssystem nach Anspruch 4,
bei dem die Übertragungseinrichtung (112) eine Einrichtung (501) enthält, die unter Ansprechen auf die ein Umlegen zu einer alternativen Bestimmung anfordernden Signale diese in der alternativen Bestimmung entsprechende Daten umsetzt, die die Identität eines Telefonapparates (T100-Tm) oder einer Übertragung (TR1-TRn) im Fernsprechvermittlungssystem (100) angeben.

6. Vermittlungssystem nach Anspruch 4,
bei dem der Vermittlungsprozessor (110) eine Einrichtung (503) aufweist, die unter Ansprechen auf die Umlegesteuernachricht prüft, ob eine neue Gesprächsverbindung zu der alternativen Bestimmung hergestellt werden kann, und eine Einrichtung (508-510), die unter Ansprechen darauf, daß die Prüfung negativ verläuft, eine Fehlersteuernachricht über die Umlegeeinrichtung (105) zum Nachrichtendienstsystem (110) zurückgibt.

7. Vermittlungssystem nach Anspruch 6,
bei dem das Nachrichtendienstsystem (110) eine Einrichtung (113) aufweist, die unter Ansprechen auf die Fehlersteuernachricht eine Ansage überträgt, die dem rufenden Teilnehmer (T100) über die bestehende Gesprächsverbindung den Mißerfolg der angeforderten Umleitung ansagt.

## Revendications

1. Un procédé d'exploitation d'un système de télécommunication d'entreprise comprenant un système de commutation téléphonique (100) qui est destiné à desservir un ensemble de postes téléphoniques (T100-Tm) et de jonctions (TR1-TRn), un système de service de messages (110) connecté au système de commutation téléphonique (100) par l'intermédiaire d'une ou de plusieurs voies de télécommunication vocales (104) et d'au moins une liaison de données (105), pour l'échange de messages de commande entre eux, le procédé étant destiné à offrir une possibilité de transfert d'appel à un demandeur (T100) sur une connexion d'appel existante dirigée vers l'une des voies de télécommunication vocales (104) ou l'un des éléments de l'ensemble de postes téléphoniques (T100-Tm) et de jonctions (TR1-TRn), cette possibilité de transfert étant établie entre les voies de télécommunication vocales (104) du système de service de messages (110) et l'ensemble de postes téléphoniques (T100-Tm) et de jonctions (TR1-TRn) du système de commutation téléphonique (100), et étant CARACTERISE PAR les étapes suivantes :
on reçoit, dans le système de télécommunication d'entreprise une demande de transfert d'appel provenant du demandeur (T100) sur la connexion d'appel existante, identifiant une destination de remplacement pour la connexion d'appel existante, cette destination de remplacement comprenant un élément de l'ensemble de postes téléphoniques (T100-Tm) et de jonctions (TR1-TRn) lorsque la connexion d'appel existante est dirigée vers l'une des voies de télécommunication vocales (104), et l'une des voies de télécommunication vocales (104) lorsque la connexion d'appel existante est dirigée vers l'un des éléments de l'ensemble de postes téléphoniques (T100-Tm) et de jonction (TR1-TRn);
on échange des messages de commande de transfert d'appel par l'intermédiaire de la liaison de données (105), entre le système de service de messages (110) et le système de commutation téléphonique (100), ces messages identifiant la connexion d'appel existante et la destination de remplacement; et
on substitue à la connexion d'appel existante, dans le système de commutation téléphonique (100), une nouvelle connexion d'appel qui provient du demandeur (T100) et qui est dirigée vers la destination de remplacement identifiée.

2. Un procédé selon la revendication 1, dans lequel l'étape de réception comprend les étapes suivantes:
on émet la demande de transfert d'appel à partir du demandeur (T100) vers le système de service de messages (110), par l'intermédiaire de la connexion d'appel existante; et
on traduit, dans le système de service de messages (110), la demande de transfert d'appel identifiant la destination de remplacement, en données identifiant l'élément qui correspond à la destination de remplacement, parmi l'ensemble de postes téléphoniques (T100-Tm) et de jonctions (TR1-TRn).

3. Un procédé selon la revendication 1, dans lequel l'étape d'échange comprend les étapes suivantes :
on effectue un test, dans le système de commutation téléphonique (100), pour déterminer si la nouvelle connexion d'appel peut être établie;
on émet des messages de commande d'échec, à partir du processeur de commutateur (102), vers le système de service de messages (110), par l'intermédiaire de la liaison de données (105), lorsque la nouvelle connexion d'appel ne peut pas être établie; et
on diffuse une annonce d'échec vers le demandeur (T100), par l'intermédiaire de la connexion d'appel existante, à partir du système de service de messages (110), sous l'effet de la réception des messages de commande d'échec.

4. Un système de commutation téléphonique (100) comportant un processeur de commutateur (102) qui est destiné à commander le fonctionnement du système de commutation téléphonique (100), connecté à un système de service de messages (110) par une ou plusieurs lignes de télécommunication (104), et une structure de transfert d'appel, comprenant des moyens (105) qui sont connectés à la fois au système de service de messages (110) et au processeur de commutateur (102), pour transférer des messages de commande entre eux; CARACTERISE EN CE QUE la structure précitée comprend des moyens (112), dans le système de service de messages (110), qui réagissent à des signaux demandant le transfert vers une destination de remplacement d'une connexion d'appel existante, par l'intermédiaire de l'une des lignes de télécommunication (104) allant vers le système de service de messages (110), ces signaux étant émis par un abonné (T100) sur la connexion d'appel existante, en émettant vers le processeur de commutateur (102), par l'intermédiaire des moyens de transfert (105), un message de commande de transfert d'appel qui identifie la destination de remplacement; et le processeur de commutateur (102) comprend des moyens (503-505) qui réagissent au message de commande de transfert d'appel en faisant en sorte que le système de commutation téléphonique (100) établisse une nouvelle connexion d'appel à partir de l'abonné (T100) vers la destination de remplacement, à la place de la connexion d'appel existante.

5. Un système de commutation selon la revendication 4, dans lequel les moyens d'émission (112) comprennent des moyens (501) qui réagissent aux signaux demandant un transfert d'appel vers une destination de remplacement, en traduisant ces signaux en données représentatives de l'identité d'un poste téléphonique (T100-Tm) ou d'une jonction (TR1-TRn) dans le système de commutation téléphonique (100), correspondant à la destination de remplacement.

6. Un système de commutation selon la revendication 4, dans lequel le processeur de commutateur (102) comprend des moyens (503) qui réagissent au message de commande de transfert d'appel en effectuant un test pour déterminer si une nouvelle connexion d'appel peut être établie vers la destination de remplacement; et des moyens (508-510) qui réagissent à l'échec du test en renvoyant un message de commande d'échec vers le système de service de messages (110), par l'intermédiaire des moyens de transfert (105).

7. Un système de commutation selon la revendication 6, dans lequel le système de service de messages (110) comprend des moyens (113) qui réagissent au message de commande d'échec en diffusant vers le demandeur (T100), par l'intermédiaire de la connexion d'appel existante, une annonce qui indique l'échec du transfert d'appel demandé.
